# EUROPEAN PATENT APPLICATION

(11) **EP 4 776 259 A1**
(43) Date of publication of application: **15.07.2026**
(21) Application number: 24834227.1
(22) Date of filing: 30.10.2024
(51) Int. Cl.: G08G 1/01, G06F 18/20

(54) **TRAFFIC ACCIDENT IDENTIFICATION METHOD, APPARATUS, AND SYSTEM, AND PROGRAM PRODUCT**

(71) Applicant: Streamax Technology Co., Ltd., Shenzhen, Guangdong 518000 (CN)
(72) Inventor: LIN, Xunan, Shenzhen, Guangdong 518000 (CN); XU, Fen, Shenzhen, Guangdong 518000 (CN); LI, Junlian, Shenzhen, Guangdong 518000 (CN); XIANG, Wenhui, Shenzhen, Guangdong 518000 (CN)
(74) Representative: Cabinet Netter
(86) International application number: PCT/CN2024/128525
(87) International publication number: WO 2026/090915

(57) **Abstract**

The present application relates to the field of artificial intelligence, and in particular, to a method and an apparatus for recognizing a traffic accident, a system and a computer program product. The method includes: by a vehicle, obtaining multimodal data and performing a preliminary screening of traffic accidents according to the multimodal data to obtain related information of a suspected traffic accident; sending, by the vehicle, the multimodal data and the related information of the suspected traffic accident to a platform; determining a personalized driving habit of the driver by the platform according to the information of the driver of the vehicle, and determining historical accident information of the location according to the location where the suspected traffic accident occurs; and obtaining a recognition result of the suspected traffic accident by the platform according to the personalized driving habit of the driver, the historical accident information of the location, and the multimodal data. In this method, the historical accident information of the location where the suspected traffic accident occurs and the personalized driving habit of the driver are combined to perform analysis and recognition on the multimodal data to obtain a more accurate traffic accident recognition result, which is conducive to reducing false alarm and improving a vehicle travelling efficiency of motorcade.

## Description

### TECHNICAL FIELD

The present application relates to the field of artificial intelligence, and more particularly, to a method for recognizing traffic accident, an apparatus for recognizing traffic accident, a system for recognizing traffic accident, and a program product.

### BACKGROUND

Recognition of traffic accident is an important research direction in the field of intelligent transportation systems and autonomous driving, and plays a vital role in improving road safety and improving traffic management. With the increasing complexity of traffic networks and the continuous growth of traffic volume, the importance of intelligent detection and recognition of traffic accident continue to rise.

A traditional accident recognition algorithm usually collects data through a device and analyzes the data in real time to determine whether a traffic accident exists currently, and generates an alarm of the accident based on an analysis result. Since an accuracy of traffic accident analyzed by the device is not high, a false alarm is prone to occur, and a vehicle travelling efficiency of a motorcade is prone to be affected.

### TECHNICAL PROBLEM

In view of this, the embodiments of the present application provide a method, an apparatus and a system for recognizing a traffic accident and a program product, which aim at solving the problems in the related art that an accuracy of traffic accident is not high, a false alarm is prone to occur and a driving efficiency of the motorcade is prone to be affected.

### TECHNICAL SOLUTIONS

In accordance with the first aspect of the embodiments of the present application, a method for recognizing a traffic accident is provided, this method includes steps of:
by a vehicle, obtaining multimodal data through a multimodal data acquisition device and performing a preliminary screening of traffic accidents according to the multimodal data to obtain related information of a suspected traffic accident, the multimodal data includes information of a driver of the vehicle, and the related information of the suspected traffic accident includes a location where a suspected traffic accident is detected;
sending, by the vehicle, the multimodal data and the related information of the suspected traffic accident to a platform;
determining, by the platform, a personalized driving habit of the driver according to the information of the driver of the vehicle, and determining historical accident information of the location; and
obtaining, by the platform, a recognition result of the suspected traffic accident according to the personalized driving habit of the driver, the historical accident information of the location, and the multimodal data.

In combination with the first aspect, in the first possible embodiment of the first aspect, the step of obtaining, by the platform, the recognition result of the suspected traffic accident according to the personalized driving habit of the driver, the historical accident information of the location, and the multimodal data includes:
generating an accident's descriptive text by the platform according to the related information of the suspected traffic accident, the personalized driving habit of the driver, and the historical accident information of the location; and
inputting, by the platform, the accident's descriptive text into a large language model to obtain a recognition result of the suspected traffic accident.

In combination with the first aspect, in the second possible embodiment of the first aspect, after the step of sending, by the vehicle, the multimodal data and the related information of the suspected traffic accident to the platform, the method further includes steps of:
continuing to obtain the multimodal data within a predetermined time duration after the related information of the suspected traffic accident is obtained by the vehicle; and
by the vehicle, sending the multimodal data for determining the related information of the suspected traffic accident, the multimodal data obtained within the predetermined time duration and the traffic accident information to the platform.

In combination with the first aspect, in the third possible embodiment of the first aspect, after the step of obtaining the recognition result of the suspected traffic accident according to the personalized driving habit of the driver, the historical accident information of the location and the multimodal data by the platform, the method further includes steps of:
determining, by the platform, an accident level according to a six-axis acceleration of the vehicle and a vehicle driving speed obtained by a sensor and in combination with weight information corresponding to a terrain of a current location of the vehicle; and
determining, by the platform, an accident processing priority of the vehicle according to the accident level.

In combination with the first aspect, in the fourth possible embodiment of the first aspect, the multimodal data includes motion data of the vehicle, internal image data of a cockpit, and external image data of the cockpit;
the step of performing the traffic accident preliminary screening according to the multimodal data to obtain the related information of the suspected traffic accident includes:
determining, by the vehicle, at least one of a vehicle emergency deceleration, a vehicle collision, and a vehicle rollover according to the motion data of the vehicle; and
determining, by the vehicle, at least one of an event indicating an abnormal movement of a driver and an event indicating a panic of the driver according to the internal image data of the cockpit.

In combination with any one of four possible embodiments in the first aspect, in the fifth possible embodiment of the first aspect, the step of obtaining, by the platform, the recognition result of the suspected traffic accident according to the personalized driving habit of the driver, the historical accident information of the location, and the multimodal data includes steps of:
determining a first related feature associated with the historical accident information, and determining a second related feature associated with the personalized driving habit; and
determining a weight of the first related feature according to a frequency of the historical accident information of the location where the suspected traffic accident occurs, and a weight of the second related feature according to the personalized driving habit of the driver.

In combination with the fifth possible embodiment, in the sixth possible embodiment of the first aspect, the step of determining the weight of the first related feature according to the frequency of the historical accident information of the location includes steps of:
adjusting, according to a direct proportion correspondence relationship, the weight of the first related feature according to an occurrence frequency of historical traffic accidents at the location where the suspected traffic accident occurs;
determining the weight of the second related feature according to the personalized driving habit of the driver; and
adjusting, according to an inverse proportion correspondence relationship, the weight of the second related feature according to a behavior degree of the personalized driving habit of the driver.

In accordance with the second aspect of the embodiments of the present application, an apparatus for recognizing a traffic accident is provided. This apparatus includes:
a data acquisition unit configured to acquire multimodal data and perform a preliminary screening on traffic accidents through a vehicle according to the multimodal data so as to obtain related information of a suspected traffic accident, the multimodal data includes information of a driver of the vehicle, and related information of the suspected traffic accident includes a location where a suspected traffic accident is detected;
an information transmission unit configured to transmit the multimodal data and the related information of the suspected traffic accident to a platform through the vehicle;
an information determination unit configured to determine a personalized driving habit of the driver through the platform according to the information of the driver of the vehicle, and determine historical accident information of the location according to the location where the suspected traffic accident occurs; and
an accident recognition unit configured to obtain a recognition result of the suspected traffic accident through the platform according to the personalized driving habit of the driver, the historical accident information of the location, and the multimodal data.

In accordance with the third aspect of the embodiments of the present application, a system for recognizing a traffic accident is provided. The system includes a memory, a processor, and a computer program stored in the memory and executable by the processor. The processor is configured to, when executing the computer program, causes the traffic accident recognition system to implement the method according to any item in the first aspect.

In accordance with the fourth aspect of the embodiments of the present application, a computer program product is provided. When the computer program product is executed by a computer, the computer is caused to implement the method in the first aspect or the various implementation manners of the first aspect.

In accordance with the fifth aspect of the embodiments of the present application, a computer-readable storage medium is provided. The computer-readable storage medium stores a computer program, that, when executed by a processor, implements the method according to any item in the first aspect.

In accordance with the sixth aspect of the embodiments of the present application, a chip is provided, this chip is configured to implement the method in the various implementation manners in the first aspect. Specifically, the chip includes: a processor configured to invoke and execute a computer program stored in the memory to cause a device having the chip to implement the method in the first aspect or the various implementation manners of the first aspect.

### BENEFICIAL EFFECTS

As compared to the related art, the embodiments of the present application have the following beneficial effects: in the embodiments of the present application, the vehicle obtains the multimodal data and performs a preliminarily screening of traffic accidents according to the multimodal data to obtain related information of a suspected traffic accident, and sends the multimodal data and the related information of the suspected traffic accident to the platform. The platform determines the personalized driving habit of the driver according to the driver information of the vehicle, and determines the historical accident information of the location according to the location where the suspected traffic accident occurs, and performs the specific preliminary screening and determination according to the personalized driving habit of the driver, the historical accident information of the location where the suspected traffic accident occurs to obtain the recognition result of the suspected traffic accident. As compared to the recognition method at the vehicle side, in this method, the historical accident information of the location where the suspected traffic accident occurs and the personalized driving habit of the driver may be combined to perform analysis and recognition on the multimodal data so as to obtain a more accurate traffic accident recognition result, which is conducive to reducing a false alarm and improving a vehicle travelling efficiency of the motorcade.

### DESCRIPTION OF THE DRAWINGS

In order to describe the technical solutions in the embodiments of the present application more clearly, a brief introduction regarding the accompanying drawings that need to be used for describing the embodiments of the present application or the existing technologies is given below. It is obvious that the accompanying drawings described below are merely some embodiments of the present application, a person of ordinary skill in the art may also obtain other drawings according to the current drawings without paying creative works.
FIG. 1 illustrates a schematic diagram of an application scenario of a method for recognizing a traffic accident provided by one embodiment of the present application;
FIG. 2 illustrates a schematic flow diagram of implementing the method for recognizing the traffic accident provided by one embodiment of the present application;
FIG. 3 illustrates a schematic flow diagram of implementing the method for recognizing the traffic accident provided by one embodiment of the present application;
FIG. 4 illustrates a schematic diagram of determining processing priorities of accidents provided by one embodiment of the present application;
FIG. 5 illustrates a schematic diagram of an apparatus for recognizing a traffic accident provided by one embodiment of the present application; and
FIG. 6 illustrates a schematic diagram of a system for recognizing a traffic accident provided by one embodiment of the present application.

### EMBODIMENTS OF THE PRESENT INVENTION

In the following descriptions, in order to describe but not intended to limit the present application, concrete details including specific system structure and technique are proposed to facilitate a comprehensive understanding of the embodiments of the present application. However, a person of ordinarily skill in the art should understand that, the present application may also be implemented in some other embodiments without these concrete details. In other conditions, detailed explanations of systems, devices, circuits and methods well known to the public are omitted, thus, unnecessary details may be avoided from disturbing the description of the present application.

In order to illustrate the technical solutions described in the present application, the present application is described below with reference to the embodiments.

Abnormal state recognition of the vehicle in a driving process includes traffic accident recognition which may effectively improve an emergency response speed, reduce traffic congestion, and improve road safety. By monitoring and automatically recognizing traffic accidents in real time, an alarm for an emergency service may be sent out quickly, and a response time is shortened, and a life may be saved at a critical moment. By quickly recognizing and responding to traffic accidents, a residence time at an accident site may be reduced, and a traffic congestion caused due to residence at the accident site is reduced accordingly. Traffic flow may be monitored and analyzed and potential traffic accidents may be predicted through a traffic accident recognition technology, and a driver, especially a driver of a motorcade, is reminded through an early warning system, in this way, a risk of occurrence of accident is reduced. Therefore, accurate recognition of traffic accidents is of great significance.

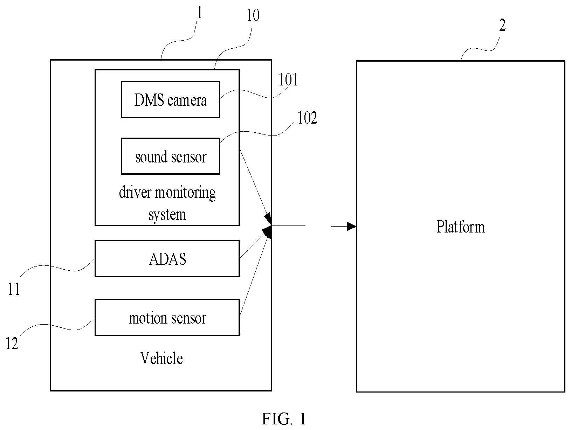

FIG. 1 illustrates a schematic diagram of an implementation scenario of a method for recognizing a traffic accident according to one embodiment of the present application. As shown in FIG. 1, the implementation scenario includes a vehicle 1 and a platform 2, where the vehicle 1 is configured to collect multimodal data and perform a preliminary screening. A device for collecting the multimodal data may include a driver monitoring system (abbreviated as DMS in English, having a full English name of Driver Monitoring System) 10, an advanced driver assistance system 11 (Abbreviated as ADAS in English, having a full English name of Advanced Driver Assistance System), and a motion sensor 12. Where, the driver monitoring system 10 may determine an action or an expression of the driver of the vehicle according to relevant information of the driver of the vehicle collected through the DMS camera 101, the action or expression of the driver includes at least one of abnormal movement of the driver and panic of the driver. The driver monitoring system 10 may use a sound sensor 102 to detect information such as a voice in the cockpit, and an abnormal squeal of the driver. The advanced driving assistance system 11 may detect whether an abnormality occurs in front of the vehicle according to an environment in a vehicle driving process collected by the ADAS camera, the abnormity includes at least one of vehicle collision and pedestrian collision. The motion sensor 12 may be configured to collect motion information of the vehicle, determine a motion state of the vehicle, the motion state includes at least one of an abnormal sudden deceleration and an abnormal vehicle location. The platform 2may preliminarily screen a suspected traffic accident according to the collected multimodal data, send the multimodal data of the suspected traffic accident to the platform 2. The platform 2 is configured to obtain a recognition result of the suspected traffic accident according to the personalized driving habit of the driver, the historical accident information of the location where the suspected traffic accident occurs, and the multimodal data.

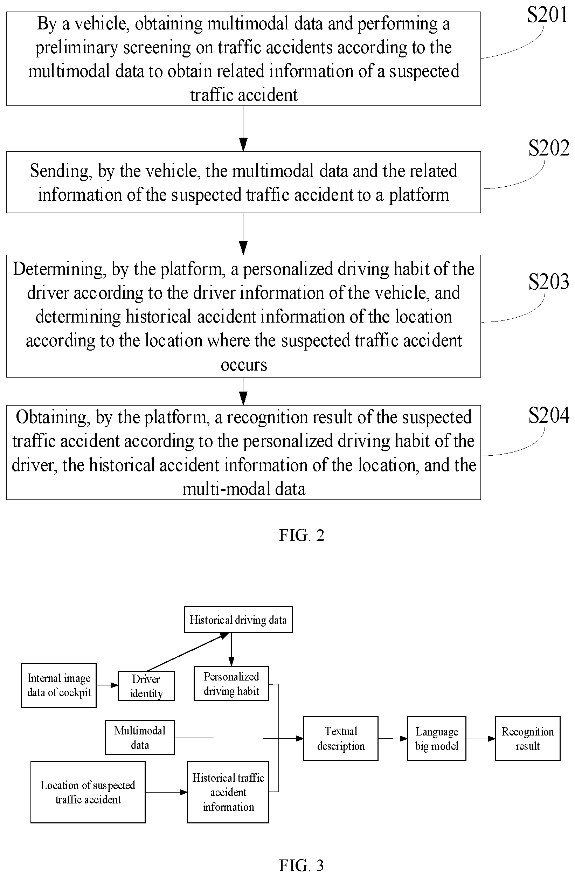

FIG. 2 is a schematic flowchart of an implementation process of a method for recognizing a traffic accident according to one embodiment of the present application.

In a step of S201, the vehicle obtains multimodal data, and performs a preliminary screening of traffic accidents according to the multimodal data to obtain related information of suspected traffic accident.

The multimodal data includes driver information of the vehicle, and the related information of the suspected traffic accident includes a location where the suspected traffic accident occurs.

The multimodal data may include internal image data of a cockpit, external image data of the cockpit, internal voice data of the cockpit, and motion data of the vehicle. A multimodal data acquisition device shown in FIG. 1 may include an ADAS, a DMS, and a motion sensor. The ADAS may be configured to obtain the internal image data and internal audio data of the cockpit. The DMS may be used to obtain the external image data of the cockpit. Motion state data of the vehicle is obtained by the motion sensor.

Where, when determining the related information of the suspected traffic accident according to the multimodal data, the vehicle may determine suspected traffic accidents respectively based on the collected multimodal data.

For example, at least one of abnormal movement of the driver and panic of the driver may be detected according to the cockpit's internal image data collected by the ADAS.

A speed of abnormal movement of the driver may be determined according to the location of the driver in the image in combination with a frame rate of the image. If both the abnormal moving speed and an amplitude of movement meet a predetermined requirement, a suspected traffic accident based on the abnormal movement of the driver may be determined. For example, a moving distance and a moving speed of the driver's head may be detected. If the moving speed is greater than a predetermined speed threshold and the moving distance is greater than a predetermined amplitude threshold, the suspected traffic accident based on the abnormal movement of the driver may be determined.

The driver's expression may be obtained according to the collected the cockpit's internal image data. When the expression of the driver is recognized as a panic expression through a model recognition, a suspected traffic accident which is determined based on the panic of the driver is obtained.

At least one of vehicle collision and pedestrian collision may be detected according to the cockpit's external image data collected by the DMS.

A distance between the vehicle and other vehicles or a distance between the vehicle and a pedestrian may be determined based on the cockpit's external image data collected by the DMS camera, and whether the vehicle has an abnormality of vehicle collision or pedestrian collision is determined according to the distance. Alternatively, the distance between the vehicle and other object may also be determined based on a distance measurement device such as a laser radar.

The motion data of the vehicle may be collected according to the motion sensor, the motion sensor is configured to detect whether the vehicle is in an abnormal deceleration state or in a suspected traffic accident state where the vehicle has an abnormal vehicle posture. The abnormal vehicle posture includes, such as vehicle rollover, anomaly of vehicle pitch angle, and the like.

A deceleration of the vehicle in a driving direction may be detected based on the motion sensor including a gyroscope or an acceleration sensor,. If the deceleration is less than a predetermined speed threshold, a suspected traffic accident based on an abnormal deceleration may be determined. The posture of the vehicle may be detected through a gyroscope or other six-axis sensors, whether the vehicle is in the suspected traffic accident state of abnormal vehicle posture (including the vehicle rollover, the anomaly of vehicle pitch angle, and the like) is determined according to a value of an included angle between the vehicle and a standard state.

Not limited thereto, different multimodal data may also be combined for performing a comprehensive judgment, for example:
The abnormal movement of the driver may be combined with the expression recognition, the movement speed and the movement amplitude of the head of the driver are detected by utilizing the cockpit's internal image data acquired by the ADAS. If both the movement speed and the movement amplitude exceed the predetermined threshold, the abnormal movement may be determined. Moreover, whether the driver exhibits an emotion such as panic is analyzed in combination with the expression recognition technology. If the conditions are satisfied, the suspected traffic accident may be determined.

Alternatively, the front collision may be combined with the state of the driver, whether a risk of existence of vehicle collision or pedestrian collision is detected through the cockpit's external image data collected by the DMS. Moreover, the possibility of collision may be further confirmed in combination with the state of the driver (such as the abnormal movement or the panic expression). For example, if the pedestrian is detected in front and the driver exhibits the panic, a high-risk state may be more efficiently determined.

Alternatively, the motion sensor is combined with the behavior of the driver, the motion sensor is used to monitor the dynamic change (such as deceleration, rollover, etc.) of the vehicle, moreover, it is possible to comprehensively determine whether a risk of traffic accident exists in combination with the abnormal behavior of the driver (e.g., violent movement or panic expression). For example, if the vehicle has an abnormal deceleration, and the driver exhibits the panic, an existence of potential accident risk may be considered.

In the step of S202, the vehicle sends the multimodal data and the related information of suspected traffic accident to a platform.

Due to the limitation of the computing power factor of the vehicle, the accuracy of the suspected traffic accident determined by multimodal features is limited. In this embodiment, after the vehicle determines the suspected traffic accident based on the multimodal data, the vehicle sends the related information of the suspected traffic accident and the multimodal data corresponding to the suspected traffic accident to the platform for further detailed analysis and processing, thereby obtaining a more accurate recognition result of the traffic accident, reducing a false alarm rate and improving a driving efficiency of the vehicle.

After determining the suspected traffic accident, the vehicle may obtain location information of the vehicle and use the location information of the vehicle as the location where the suspected traffic accident occurs of the vehicle.

The obtaining of location information of the vehicle may be determined through a satellite positioning signal, or be determined based on a lane-assisted positioning based base station which includes, for example, a radio-frequency positioning based base station for determining the location where the suspected traffic accident occurs. Alternatively, the location where the suspected traffic accident occurs may also be determined according to a vehicle communication module. Or alternatively, the location where the suspected traffic accident occurs may also be determined by another vehicle through a vehicle-mounted interconnection communication system.

In one possible embodiment, after the related information of the suspected traffic accident and the multimodal data are sent to the platform in this embodiment of this application, the vehicle may further continue to collect multimodal data of a predetermined time duration, and send the multimodal data of the predetermined time duration to the platform. In this way, the platform may obtain a more accurate analysis result. For example, the vehicle may further collect multimodal data for 1-5 minutes and send the collected multimodal data to the platform.

In the step of S203, the platform determines a personalized driving habit of the driver according to the driver information of the vehicle, and determines historical accident information of the location according to the location where the suspected traffic accident occurs.

The driver information may include feature data of the driver in the cockpit's internal image data collected by the ADAS. For example, the platform may determine a face image of the driver according to the cockpit's internal image data collected by the ADAS, search a driver identifier according to the face image of the driver, and determine the personalized driving habit of the driver based on the searched driver identifier.

The driving habit data includes habit data such as habitually closing eyes, habitually braking, habitually accelerating and the like, that is, a second related feature associated with the driving habit.

Historical accident information of the location where the suspected traffic accident occurs is determined according to a detected time of the suspected traffic accident in combination with the collected positioning information. Historical accident information matching the location where the suspected traffic accident occurs, such as historical accident information of an accident whose distance from the location where the suspected traffic accident occurs is less than a predetermined distance of radius, may be determined by querying in an accident database based on the location.

The searched historical accident information includes a main accident factor that occurs in the historical accident, that is, the first related feature related to the historical accident information which includes main accident factors such as road surface factors, visibility factors, operation factors of the driver, and the like.

Based on the determined first related feature and the determined second related feature, for the weight of the feature in the collected multimodal data, the weight of the first related feature may be adjusted according to a positive proportion correspondence according to an occurrence frequency of the historical traffic accident of the location where the suspected traffic accident occurs. That is, the higher the occurrence frequency of the historical traffic accidents occur at the location, the higher the weight of the first related feature. Thus, the traffic accident occurring at the location may be more reliably recognized.

According to a habit degree of the personalized driving habit of the driver, the weight of the second related feature is adjusted according to an inversely proportional correspondence relationship. For example, the higher the habit degree of the personalized driving habit, the lower the weight of the second related feature. Thus, the number of false alarms which are caused by recognizing the personalized driving habits as the traffic accidents is reduced, which is conducive to improving the accuracy of recognition.

In a step of S204, the platform obtains a recognition result of the suspected traffic accident according to the personalized driving habit of the driver, the historical accident information of the location, and the multimodal data.

In this embodiment of the present application, the multimodal data is uploaded to the platform, the multimodal data includes the multimodal data within a predetermined time duration before the suspected traffic accident is detected, or the multimodal data within a predetermined duration after the suspected traffic accident is detected. The predetermined time duration before the suspected traffic accident is detected may be the same as or different from the predetermined time duration after the suspected traffic accident is detected.

In this embodiment of the present application, the platform may generate an accident's descriptive text from the related information of suspected traffic accident, the personalized driving habit of the driver, and the historical accident information of the location where the suspected traffic accident occurs, perform a text recognition on the accident's descriptive text through a large language model, and perform a more detailed analysis and determination on the suspected traffic accident to obtain the recognition result of the suspected traffic accident.

FIG. 3 is a schematic diagram of an implementation process of an accident recognition performed by the large language model according to one embodiment of the present application. In this implementation process, the driver identifier may be searched according to the cockpit's internal image data, and the historical driving data of the driver is searched according to the driver identifier. The historical driving data of the driver may be input into a trained habit data extraction model to obtain the personalized driving habit of the driver. According to the location where the suspected traffic accident occurs, a historical traffic accident occurring at a location which has a distance of radius from the location where the suspected traffic accident occurs that meets a predetermined distance of radius (i.e., the distance from the location where the suspected traffic accident occurs is less than the predetermined distance of radius) is searched in a traffic accident database, and the historical traffic accident information related to the searched historical traffic accident is obtained.

Textual accident descriptive information may be obtained according to the uploaded multimodal data and in combination with the determined historical traffic accident information and the personalized driving habit. The accident descriptive information is input into the language model to obtain the recognition result of the suspected traffic accident obtained based on the analysis of the language model.

In this method, the analysis and the determination are performed based on the historical traffic accident information which is determined based on the location where the suspected traffic accident occurs and in combination with the personalized driving data of the driver, a more accurate accident recognition result may be obtained, the number of false alarms are reduced, and the driving efficiency of the motorcade is improved.

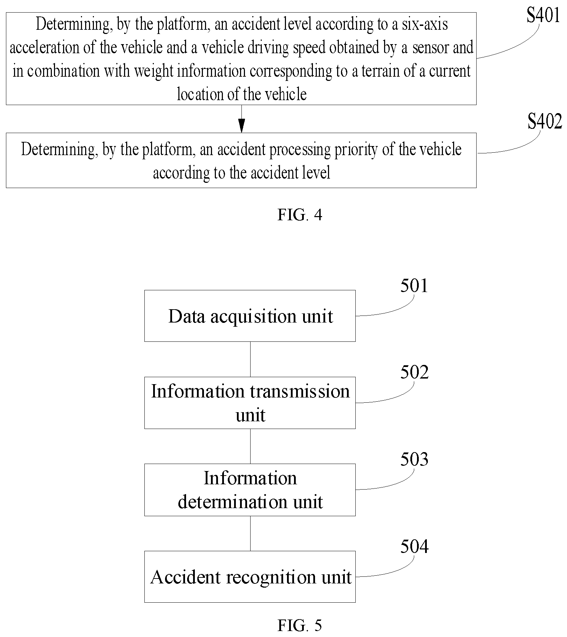

In one possible embodiment, the number of suspected traffic accidents reported by the vehicle is large. For example, the platform may receive related information of suspected traffic accidents uploaded by the N vehicle. In order to preferentially respond to a more urgent suspected traffic accident, a method for determining priorities of suspected traffic accidents shown in FIG. 4 may be used. This method includes:
In a step of S401, the platform determines an accident level according to six-axis acceleration of the vehicle and the vehicle driving speed acquired by the sensor and in combination with weight information corresponding to a terrain of the current location of the vehicle.

In this embodiment of the present application, the six-axis acceleration and the driving speed of the vehicle may be determined according to the motion data collected by the motion sensor of the vehicle. A six-axis acceleration acquisition device of the vehicle includes a three-axis accelerometer and a three-axis gyroscope. The three-axis accelerometer is used for measuring linear acceleration of the vehicle in three directions of X, Y, Z (a forward direction of the general vehicle is defined as the X direction, and the vertical and upward direction is defined as the Z direction), the three-axis gyroscope measures angular velocities of the vehicle around the X axis, the Y axis and the Z axis. The X-axis gyroscope is configured to measure a rotation speed of the vehicle around the X axis, that is, a yawing rate of the vehicle. The Y-axis gyroscope is configured to measure a rotation speed of the vehicle around the Y axis, that is, a pitching rate of the vehicle. The Z-axis gyroscope is configured to measure a rotation speed of the vehicle around the Z axis, that is, a roll rate of the vehicle.

Where, when the weight information is determined according to the terrain of the current location of the vehicle, the terrain information may include an off-road terrain, a non-hardened pavement terrain, a hardened pavement terrain, and the like. Where, the lower the flatness of the road surface, the weight of the acceleration in the Z direction and the rotation speed along the X axis and the Y axis may be correspondingly reduced, and the weight of the vehicle driving speed may be correspondingly increased. The linear acceleration in the X-axis direction and the weight of the rotation speed along the Y-axis are adjusted according to an inclination angle of the road surface. For example, the greater the inclination angle of the road surface, the smaller the weight of the rotation speed along the Y-axis.

A priority score of the suspected traffic accident is obtained based on the detected six-axis acceleration and the vehicle driving speed and in combination with the weight determined according to the terrain, and an accident level of each suspected traffic accident is determined according to the priority score.

In a step of S402, the platform determines an accident processing priority of the vehicle according to the accident level.

According to the determined accident level, a suspected traffic accident having a higher level is preferentially processed. Thus, more serious traffic accidents may be recognized more reliably.

It should be understood that, the values of serial numbers of the steps in the aforementioned embodiments do not indicate an order of execution sequences of the steps; instead, the execution sequences of the steps should be determined by functionalities and internal logic of the steps, and thus shouldn't be regarded as limitation to implementation processes of the embodiments of the present application.

FIG. 5 is a schematic diagram of an apparatus for recognizing a traffic accident provided in one embodiment of the present application. This apparatus includes:
a data acquisition unit 501 configured to acquire multimodal data and perform a preliminary screening of traffic accidents through a vehicle according to the multimodal data to obtain related information of a suspected traffic accident, the multimodal data includes driver information of the vehicle, and related information of the suspected traffic accident includes a location where a suspected traffic accident occurs;
an information transmission unit 502 configured to transmit the multimodal data and the related information of the suspected traffic accident to a platform through the vehicle;
an information determination unit 503 configured to determine a personalized driving habit of the driver through the platform according to the driver information of the vehicle, and determine historical accident information of the location according to the location where the suspected traffic accident occurs; and
an accident recognition unit 504 configured to obtain a recognition result of the suspected traffic accident by the platform according to the personalized driving habit of the driver, the historical accident information of the location, and the multimodal data.

The apparatus for recognizing the traffic accident shown in FIG. 5 corresponds to the method for recognizing the traffic accident as shown in FIG. 2.

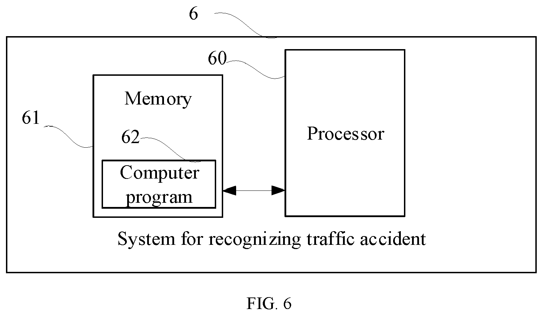

FIG. 6 is a schematic diagram of a system for recognizing a traffic accident provided in one embodiment of the present application. As shown in FIG. 6, the system 6 for recognizing the traffic accident in this embodiment includes: a processor 60, a memory 61 and a computer program 62 (e.g., a program for recognizing a traffic accident) stored in the memory 61 and executable by the processor 60. The processor 60 is configured to, when executing the computer program 62, implement the steps in the various method embodiments for recognizing the traffic accident.

As an example, the computer program 62 may be divided into one or a plurality of modules/units, the one or plurality of modules/units are stored in the memory 61, and are executed by the processor 60 so as to implement the present application. The one or plurality of modules/units may be a series of computer program instruction segments that may accomplish particular functionalities, these instruction segments are used for describing an executive process of the computer program 62 in the system for recognizing the traffic accident.

The system for recognizing the traffic accident may include, but is not limited to, the processor 60 and the memory 61. A person of ordinary skill in the art may understand that, FIG. 6 is only one example of the system for recognizing the traffic accident, but should not be constituted as limitation to the system for recognizing the traffic accident, more or less components than the components shown in FIG. 6 may be included. As an alternative, some components or different components may be combined. For example, the system for recognizing the traffic accident may also include an input and output device, a network access device, a bus, etc.

The so-called processor 60 may be central processing unit (Central Processing Unit, CPU), and may also be other general purpose processor, digital signal processor (Digital Signal Processor, DSP), application specific integrated circuit (Application Specific Integrated Circuit, ASIC), field-programmable gate array (Field-Programmable Gate Array, FGPA), or some other programmable logic devices, discrete gate or transistor logic device, discrete hardware component, etc. The general purpose processor may be a microprocessor, as an alternative, the processor may also be any conventional processor, or the like.

The memory 61 may be an internal storage unit of the system 6 for recognizing the traffic accident, such as a hard disk or a memory of the system 6 for recognizing the traffic accident. The memory 61 may also be an external storage device of the system 6 for recognizing the traffic accident, such as a plug-in hard disk, a smart media card (Smart Media Card, SMC), a secure digital (Secure Digital, SD) card, a flash card (Flash Card, FC) equipped on the system 6 for recognizing the traffic accident. Furthermore, the memory 61 may not only include the internal storage unit of the system 6 for recognizing the traffic accident, but also include the external memory of the system 6 for recognizing the traffic accident. The memory 61 is configured to store the computer program and other procedures and data as required by the system 6 for recognizing the traffic accident. The memory 61 may also be configured to store data that has been output or being ready to be output temporarily.

The person of ordinary skill in the art may clearly understand that, for the convenience of description and for conciseness, the dividing of the various functional units and functional modules is merely described according to examples. In an actual application, these functions may be assigned to different functional units and functional modules to be accomplished, that is, an inner structure of the device is divided into different functional units or modules to accomplish the whole or some of functionalities described above. The various functional units and modules in the embodiments may be integrated into a processing unit, or each of the units exists independently and physically, or two or more than two of the units are integrated into a single unit. The aforementioned integrated unit may either by actualized in the form of hardware or in the form of software functional units. In addition, specific names of the various functional units and modules are only used to be distinguished from each other conveniently, rather than being intended to limit the protection scope of the present application. Regarding the specific operating process of the units and modules in the aforementioned system, reference may be made to a corresponding process in the aforementioned method embodiments. This specific operating process of the units and modules is not repeatedly described herein.

In the aforementioned embodiments, the descriptions of the various embodiments are emphasized respectively, regarding a part of one embodiment which has not been described or disclosed in detail, reference can be made to relevant descriptions in other embodiments.

The person of ordinary skill in the art may understand that, the elements and algorithm steps of each of the examples described in connection with the embodiments disclosed herein may be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

It should be understood that, in the embodiments of the present application, the disclosed device/terminal device and method could be implemented in other ways. For example, the device described above are merely illustrative. For example, the division of the units is only a logical function division, and other division could be used in the actual implementation. For example, multiple units or components could be combined or integrated into another system, or some features may be ignored, or not performed. In another aspect, the coupling or direct coupling or communicating connection shown or discussed could be an indirect coupling or a communicating connection through some interfaces, devices or units, and the coupling or direct coupling or communicating connection could be electrical, mechanical, or in other form.

The units described as separate components may be or may not be physically separate, the components shown as units may be or may not be physical units, the components may be located in one place, or be distributed onto multiple network elements. A part or a whole of the elements may be selected to achieve the objective of the technical solution of this embodiment according to the actual requirement.

In addition, the various functional units in each of the embodiments of the present application may be integrated into a single processing unit, or exist individually and physically, or two or more than two units are integrated into a single unit. The aforementioned integrated unit may either be achieved by hardware, or be achieved in the form of software functional units.

When the integrated unit is achieved in the form of software functional units, and is sold or used as an independent product, the integrated unit may be stored in a computer readable storage medium. Based on this understanding, a whole or part of flow process for implementing the method in the embodiments of the present application may also be accomplished in the manner of using computer program to instruct relevant hardware. When the computer program is executed by the processor, the steps in the various method embodiments described above may be implemented. Where, the computer program includes computer program codes, which may be in the form of source code, object code, executable documents or some intermediate form, etc. The computer readable medium may include: any physical equipment or device that may carry the computer program codes, recording medium, USB flash disk, mobile hard disk, hard disk, optical disk, computer memory, ROM (Read-Only Memory), RAM (Random Access Memory), electrical carrier signal, telecommunication signal and software distribution medium, etc. It needs to be explained that, the contents contained in the computer readable medium may be added or reduced appropriately according to the requirement of legislation and patent practice in a judicial district. For example, in some judicial districts, the computer readable medium doesn't include electrical carrier signal and telecommunication signal according to legislation and patent practice.

In addition, a computer program product is further provided in one embodiment of the present application. When the computer program product is executed by the computer, the computer is caused to perform the method in the various embodiments.

The foregoing embodiments are only intended to explain the technical solutions of the present application, rather than limiting the technical solutions of the present application. Although the present application has been described in detail with reference to these embodiments, a person of ordinary skilled in the art should understand that, the technical solutions disclosed in the embodiments may also be amended, some technical features in the technical solutions may also be equivalently replaced. The amendments or the equivalent replacements don't cause the essence of the corresponding technical solutions to be deviated from the spirit and the scope of the technical solutions in the embodiments of the present application, and thus should all be included in the protection scope of the present application.

## Claims

1. A method for recognizing a traffic accident, **characterized in that**, the method comprises steps of:
by a vehicle, obtaining multimodal data and performing a preliminary screening of traffic accidents according to the multimodal data to obtain related information of a suspected traffic accident, wherein the multimodal data comprises information of a driver of the vehicle, and the related information of the suspected traffic accident comprises a location where a suspected traffic accident is detected;
sending, by the vehicle, the multimodal data and the related information of the suspected traffic accident to a platform;
determining, by the platform, a personalized driving habit of the driver according to the information of the driver of the vehicle, and determining historical accident information of the location according to the location where the suspected traffic accident occurs; and
obtaining, by the platform, a recognition result of the suspected traffic accident according to the personalized driving habit of the driver, the historical accident information of the location, and the multimodal data.

2. The method according to claim 1, **characterized in that**, the step of obtaining, by the platform, the recognition result of the suspected traffic accident according to the personalized driving habit of the driver, the historical accident information of the location, and the multimodal data comprises:
generating an accident's descriptive text by the platform according to the related information of the suspected traffic accident, the personalized driving habit of the driver, and the historical accident information of the location; and
inputting, by the platform, the accident's descriptive text into a large language model to obtain a recognition result of the suspected traffic accident.

3. The method according to claim 1, **characterized in that**, after the step of sending, by the vehicle, the multimodal data and the related information of the suspected traffic accident to the platform, the method further comprises steps of:
continuing to obtain the multimodal data within a predetermined time duration after the related information of the suspected traffic accident is obtained by the vehicle; and
by the vehicle, sending the multimodal data for determining the related information of the suspected traffic accident, the continuedly obtained multimodal data and the traffic accident information to the platform.

4. The method according to claim 1, **characterized in that**, after the step of obtaining the recognition result of the suspected traffic accident according to the personalized driving habit of the driver, the historical accident information of the location and the multimodal data by the platform, the method further comprises steps of:
determining, by the platform, an accident level according to a six-axis acceleration of the vehicle and a vehicle driving speed obtained by a sensor and in combination with weight information corresponding to a terrain of a current location of the vehicle; and
determining, by the platform, an accident processing priority of the vehicle according to the accident level.

5. The method according to claim 1, **characterized in that**, the multimodal data comprises motion data of the vehicle, internal image data of a cockpit, and external image data of the cockpit;
the step of performing the preliminary screening of the traffic accidents according to the multimodal data to obtain the related information of the suspected traffic accident comprises steps of:
determining, by the vehicle, at least one of a vehicle emergency deceleration, a vehicle collision, and a vehicle rollover according to the motion data of the vehicle; and
determining, by the vehicle, at least one of an event indicating an abnormal movement of a driver and an event indicating a panic of the driver according to the internal image data of the cockpit.

6. The method according to any one of claims 1-5, **characterized in that**, the step of obtaining, by the platform, the recognition result of the suspected traffic accident according to the personalized driving habit of the driver, the historical accident information of the location, and the multimodal data comprises steps of:
determining a first related feature associated with the historical accident information, and determining a second related feature associated with the personalized driving habit; and
determining a weight of the first related feature according to a frequency of the historical accident information of the location, and a weight of the second related feature according to the personalized driving habit of the driver.

7. The method according to claim 6, **characterized in that**, the step of determining the weight of the first related feature according to the frequency of the historical accident information of the location comprises steps of:
adjusting, according to a direct proportion correspondence relationship, the weight of the first related feature according to an occurrence frequency of historical traffic accidents at the location;
determining the weight of the second related feature according to the personalized driving habit of the driver; and
adjusting, according to an inverse proportion correspondence relationship, the weight of the second related feature according to a behavior degree of the personalized driving habit of the driver.

8. An apparatus for recognizing a traffic accident, **characterized in that**, the apparatus comprises:
a data acquisition unit configured to acquire multimodal data and perform a preliminary screening on traffic accidents through a vehicle according to the multimodal data so as to obtain related information of a suspected traffic accident, the multimodal data comprises information of a driver of the vehicle, and related information of the suspected traffic accident comprises a location where a suspected traffic accident is detected;
an information transmission unit configured to transmit the multimodal data and the related information of the suspected traffic accident to a platform through the vehicle;
an information determination unit configured to determine a personalized driving habit of the driver through the platform according to the information of the driver of the vehicle, and determine historical accident information of the location according to the location where the suspected traffic accident occurs; and
an accident recognition unit configured to obtain a recognition result of the suspected traffic accident through the platform according to the personalized driving habit of the driver, the historical accident information of the location, and the multimodal data.

9. A system for recognizing a traffic accident, comprising a memory, a processor, and a computer program stored in the memory and executable by the processor, **characterized in that**, the processor is configured to, when executing the computer program, causes the system for recognizing the traffic accident to implement the method according to any one of claims 1-7.

10. A computer program product, comprising a computer program instruction, **characterized in that**, when the computer program is executed, the method of any one of claims 1-7 is caused to be performed.
